(19) **Europäisches Patentamt / European Patent Office / Office européen des brevets**

(11) **EP 3 131 816 B1**

(12) # FASCICULE DE BREVET EUROPEEN

(45) Date de publication et mention
de la délivrance du brevet:
**06.06.2018 Bulletin 2018/23**

(21) Numéro de dépôt: **15725743.7**

(22) Date de dépôt: **15.04.2015**

(51) Int Cl.:
**B64D 31/12** (2006.01)        **F01D 21/14** (2006.01)
**F02C 9/16** (2006.01)         **F02C 9/42** (2006.01)

(86) Numéro de dépôt international:
**PCT/FR2015/051027**

(87) Numéro de publication internationale:
**WO 2015/159027 (22.10.2015 Gazette 2015/42)**

(54) **PROCÉDÉ DE SYNCHRONISATION DES MOTEURS D'UN AVION A DOUBLE ETAT INTERMEDIAIRE**

VERFAHREN ZUR SYNCHRONISIERUNG DER MOTOREN EINES FLUGZEUGS MIT DUALEM ZWISCHENZUSTAND

METHOD FOR SYNCHRONISING THE ENGINES OF AN AIRPLANE WITH DUAL INTERMEDIATE STATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2014 FR 1453373**

(43) Date de publication de la demande:
**22.02.2017 Bulletin 2017/08**

(73) Titulaire: **SAFRAN AIRCRAFT ENGINES**
**75015 Paris (FR)**

(72) Inventeur: **NOBELEN, Florent**
**77550 Moissy Cramayel (FR)**

(74) Mandataire: **Pichat, Thierry et al**
**Ernest Gutmann - Yves Plasseraud SAS**
**3, rue Auber**
**75009 Paris (FR)**

(56) Documents cités:
**WO-A1-2013/034839      GB-A- 2 225 134**

**Description**

La présente invention concerne un procédé de synchronisation des moteurs d'un avion, et en particulier des turboréacteurs à double corps d'un avion.

Il est précisé que dans le présent texte, quand on se réfère à une (dés)activation des moteurs ou de la synchronisation, il s'agit d'une (dés)activation de la (des) logique(s) qui les commande(nt), c'est-à-dire du passage d'un état à un autre, jusqu'à ce que par exemple, dans l'état activé (16 ci-après), un ordre de synchronisation des moteurs (par exemple des vitesses N1 de rotation de leurs corps BP) aboutisse à une adaptation de vitesses.

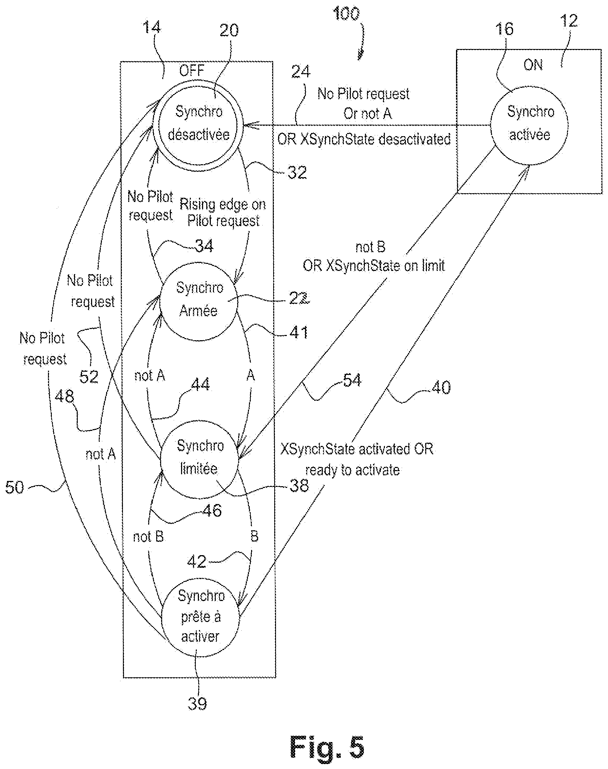

Un moteur (ou une synchronisation) qui « s'active », respectivement « se désactive », veut dire que la différence entre les vitesses des corps BP entre eux et/ou HP entre eux vont devenir les mêmes, respectivement vont devenir différentes (si l'on suit la logique de la figure 5).

Une petite différence dans les vitesses de rotation des moteurs d'un avion peut en effet provoquer un bruit acoustique et des vibrations indésirables. Il est connu de synchroniser les corps basse-pression (BP) ou haute-pression (HP) des moteurs à double corps d'un avion pour diminuer les vibrations ressenties dans la cabine et le bruit, et ainsi augmenter le confort des passagers.

Cependant, cette fonction de synchronisation ne répond qu'à des exigences de confort et ne doit pas engendrer de risques pour les moteurs ou l'avion. La synchronisation des moteurs est donc désactivée si des conditions de sécurité ne sont pas remplies, même si une demande d'activation de la synchronisation est émise par le pilote et que les conditions d'activation de la synchronisation sont toutes remplies. Ces conditions de sécurité représentent par exemple des valeurs limites qui ne doivent pas être atteintes pour que la synchronisation soit activée et maintenue. Ces valeurs sont par exemple des vitesses minimale et maximale du rotor du corps HP de chaque moteur (N2min, N2max), une pression statique maximale dans la chambre de combustion de chaque moteur (Ps3max), et des valeurs limites inférieure (risque de perte de poussée) et supérieure (risque de pompage) du rapport Q de dimensionnement de chaque moteur (Q = débit de carburant / Ps3max).

Cependant, les conditions de sécurité ne peuvent pas être toutes vérifiées à chaque fois qu'une demande d'activation de la synchronisation est émise par le pilote car cela nuirait à l'efficacité du moteur, c'est pourquoi l'activation de la synchronisation ne se fait pas uniquement sur simple demande du pilote et nécessite la vérification de conditions supplémentaires.

FR-A1-2 639 444 décrit un procédé de synchronisation d'un moteur asservi et d'un moteur maître dans un avion, ces moteurs étant des turboréacteurs à double corps et comprenant chacun un rotor de soufflante et un rotor de générateur de gaz. La vitesse de rotation de la soufflante ou du rotor du corps basse-pression du moteur asservi (appelée N1) et celle du générateur de gaz ou du rotor du corps haute-pression du moteur asservi (appelée N2) peuvent être commandées en régulant le débit d'alimentation en carburant du moteur, en modifiant le calage angulaire des aubes de stator du moteur, etc.

Dans ce document, l'activation de la synchronisation se fait lorsque la différence entre les vitesses précitées des soufflantes (ΔN1) des deux moteurs devient inférieure à 100tr/min et elle se désactive lorsque cette différence dépasse cette valeur, ou lorsque l'un des moteurs s'arrête ou cale, ou lorsque l'un des signaux N1 n'est pas détecté, ou lorsque le rapport PLA/N2 du moteur asservi dépasse une certaine limite (l'abréviation PLA - *Power Level Angle*-correspondant à la position de la manette des gaz dans le cockpit de l'avion). Le pilote de l'avion est informé de la désactivation de la synchronisation. La synchronisation se réactive automatiquement quand la différence ΔN1 redescend sous la barre des 100tr/min. Ce procédé est entièrement automatique et ne requiert pas d'ordre spécifique de la part du pilote de l'avion.

Cette synchronisation présente l'inconvénient d'être entièrement automatique. En effet, la synchronisation des moteurs est réactivée lorsque toutes les conditions sont à nouveau remplies, sans demande spécifique du pilote de l'avion. Il se peut toutefois que ces conditions présentent un risque pour les moteurs ou pour l'avion (cas de pompage ou de survitesse des moteurs par exemple) et qu'il soit dangereux de réactiver automatiquement la synchronisation des moteurs. Par ailleurs, quand ces conditions ne présentent aucun risque pour les moteurs ou l'avion (cas de régime transitoire des moteurs par exemple), il ne paraît pas souhaitable d'exiger une validation du pilote pour la réactivation de la synchronisation car cela pourrait avoir pour conséquence que le pilote soit distrait et déconcentré par d'éventuels multiples changements des résultats de ces conditions (ballottement vrai/faux).

En outre, lorsqu'une synchronisation est automatiquement activée, la valeur de consigne de la vitesse N1 (ou N2) du moteur esclave s'aligne sur la valeur de la vitesse du moteur maître et s'écarte ainsi de sa consigne originale, qui était calculée pour fournir la poussée requise de manière optimale. Du fait de la synchronisation des régimes, la poussée de ce moteur n'est plus optimale : elle est soit augmentée, diminuant la durée de vie du moteur, soit diminuée, obligeant le pilote à pousser la manette des gaz, ce qui revient donc au même. Ceci est un inconvénient majeur.

Face à cela, il a été proposé dans WO2013/034839 de synchroniser entre eux des moteurs d'un avion au moyen d'au moins une logique d'activation par moteur, destinée à vérifier des conditions de sécurité et/ou des conditions d'activation pour l'application de la synchronisation, chaque logique d'activation définissant et évoluant entre au moins un état désactivé, un état armé et un état activé, le procédé comprenant, par moteur:

- un passage de la logique d'activation de l'état désactivé à l'état armé lorsqu'un ordre d'activation est donné par un pilote de l'avion ;
- une vérification périodique des conditions de sécurité et/ou des conditions d'activation en relation avec lesdits états, pour définir si lesdites conditions sont remplies ou non remplies,
- un passage de la logique d'activation de l'état armé à l'état activé lorsque certaines des conditions de sécurité et/ou d'activation sont remplies ; et passage de la logique d'activation de l'état activé ou armé à l'état désactivé lorsqu'un ordre de désactivation est donné par le pilote ou lorsque certaines des conditions de sécurité ne sont pas remplies.

Chaque logique d'activation comprendra ainsi au moins un état d'activation de la synchronisation supplémentaire par rapport à ce qui est prévu dans FR-A1-2 639 444, où la synchronisation est soit désactivée (mode OFF), soit activée (mode ON), la synchronisation ci-dessus pouvant de façon différente adopter au moins un état armé en mode OFF, en plus de l'état désactivé.

Pour pertinente qu'elle soit, cette solution n'évite toutefois pas qu'un moteur puisse être activé seul.

Or, ceci peut affecter la synchronisation, voire de bon fonctionnement des moteurs ou la sécurité du vol.

Pour traiter ce problème, il est ici proposé:

- que le passage de la logique d'activation de l'état armé à l'état activé s'opère via successivement un premier puis un deuxième états intermédiaires de la logique d'activation,
- que (au moins) pour tout passage de logique d'activation du second état intermédiaire à l'état activé, un échange de cette donnée entre les moteurs soit effectué par une liaison numérique d'échange, de telle sorte:

    -- que le passage de la logique d'activation à l'état activé de l'un des moteurs impose que les conditions de sécurité et d'activation appliquée à l'autre, ou aux autres, moteur(s) soient toutes remplies,
    -- et, si la logique d'activation de l'un des moteurs passe à l'état désactivé, que la logique d'activation de l'autre, ou des autres, moteur(s) y passe(nt) aussi, automatiquement, et

- que, pour chaque moteur, le passage de la logique d'activation de l'état armé au premier puis au second état intermédiaire s'opère automatiquement lorsqu'une première partie puis une seconde partie, différente de la première, des conditions de sécurité et/ou d'activation sont remplies.

Ceci imposera bien sûr une prise en compte, sur chaque moteur, de l'état de la synchronisation : synchronisation active, état armé sur un moteur, pas sur l'autre...

Ainsi, lorsque les moteurs sont synchronisés, et qu'un moteur a un problème mais que la condition d'activation est perdue avant la détection de la panne, on évitera que la synchronisation ne soit désactivée que sur le moteur ayant la panne.

On recommande en outre que le passage de la logique d'activation du second état intermédiaire à l'état activé soit effectué automatiquement sur l'un des moteurs si l'autre (les autres) moteur(s) est (sont) dans ledit second état intermédiaire ou dans l'état activé.

Ainsi, la synchronisation pourra s'activer simultanément sur les moteurs. A priori le passage dans ce second état intermédiaire sera transitoire pour le logiciel.

Il est par ailleurs conseillé :

- que dans le cas où la logique d'activation est à l'état désactivé, un ordre d'activation doive être émis par le pilote pour passer la logique d'activation à l'état armé, et/ou
- qu'un passage de la logique d'activation de l'un quelconque des premier état intermédiaire, second état intermédiaire et état armé, vers l'état désactivé, soit effectué lorsqu'un ordre de désactivation est donné par le pilote.

Ainsi, la sécurité est optimisée.

Il est par ailleurs recommandé que, si la vérification périodique des conditions de sécurité et/ou d'activation établit :

- que ladite seconde partie des conditions ou que la donnée relative à l'état d'activation de la logique d'activation d'un des moteurs envoyée vers l'autre moteur indique que sa logique d'activation est dans le premier état intermédiaire, alors que la logique d'activation de cet autre moteur est dans l'état activé, cette logique d'activation passe aussi dans le premier état intermédiaire, et/ou
- que ladite première partie des conditions n'est plus remplie pour l'un au moins des moteurs, tandis que la logique d'activation est dans le premier état intermédiaire, ladite logique d'activation passe alors dans l'état armé.

Il est aussi conseillé que les conditions de sécurité soient différentes des conditions d'activation et doivent être remplies pour protéger les moteurs et l'avion. Ces conditions de sécurité sont par exemple : l'absence de pompage des moteurs, de survitesse des moteurs, de sous ou sur-poussée des moteurs, de panne majeure des moteurs, etc. Ces conditions permettent par exemple d'éviter qu'un moteur sain suive le comportement d'un moteur défaillant.

De préférence, pour une simplicité, efficacité et sécurité opérationnelles :

- les conditions de sécurité seront les conditions au moins nécessaires pour qu'une logique d'activation passe de l'état armé au premier état intermédiaire,
- et les conditions d'activation seront celles au moins nécessaires pour qu'une logique d'activation passe du premier au second état intermédiaire, puis s'active effectivement automatiquement, si tous les moteurs sont :

-- dans ledit deuxième état intermédiaire (condition « ready to activate »),
-- ou dans l'état de synchronisation activée (condition « XSynchState activated ».

Les conditions d'activation de la synchronisation doivent être remplies pour optimiser le fonctionnement des moteurs, car la synchronisation n'est pas adaptée à tous les régimes de fonctionnement et peut être différente selon le type de régime (HP ou BP) synchronisés des moteurs. Les conditions d'activation sont par exemple une différence prédéterminée de consignes de vitesse des corps BP et/ou HP des moteurs; une différence prédéterminée de vitesses des corps BP et/ou HP des, une différence prédéterminée entre la consigne et la vitesse mesurée du corps BP et/ou HP d'un, un régime de croisière, transitoire, de ralenti, ou différent du décollage et de l'atterrissage.

Dans le cas où la logique d'activation est à l'état armé ou activé, un ordre de désactivation peut être émis par le pilote. Le passage de l'état activé ou armé à l'état désactivé est toutefois automatique dans le cas où au moins une partie des conditions de sécurité n'est pas remplies.

Il y a donc deux types d'activation ou réactivation, l'une automatique l'autre ordonnée par le pilote de l'avion. La réactivation automatique est réalisée lorsque seules des conditions d'activation ont changé (les conditions de sécurité étant toujours remplies) et la réactivation à confirmer par le pilote est réalisée lorsque des conditions de sécurité ont changé (quel que soit le résultat de la vérification des conditions d'activation).

En pratique, on installe dans la cabine de pilotage de l'avion au moins un bouton d'activation de la synchronisation, et en particulier deux boutons dans le cas où les moteurs sont du type à double corps (HP et BP). Le premier bouton est destiné à commander l'activation de la synchronisation des corps BP des moteurs (N1Sync) et le second est destiné à commander l'activation de la synchronisation des corps HP des moteurs (N2Sync). Chaque bouton peut adopter deux positions, une position ON (par exemple enfoncée et allumée) et une position OFF (sortie et éteinte). Le pilote ne peut pas demander simultanément la synchronisation des deux corps. Dans le cas où il appuie sur le premier bouton pour l'enfoncer, alors que le second bouton est déjà en position enfoncée, ce second bouton se désenclenche automatiquement pour revenir en positon sortie.

Le pilote de l'avion doit donc appuyer sur l'un des boutons pour requérir l'activation de la synchronisation, qui passe alors de l'état désactivé à l'état armé.

Comme expliqué dans ce qui précède, la logique d'activation passe de l'état armé à l'état activé, via les premier puis second états intermédiaires transitoires successifs lorsqu'au moins certaines conditions de sécurité et/ou d'activation sont remplies.

Le passage du second état intermédiaire à l'état activé de la logique d'activation s'opère automatiquement sous réserve que l'autre (des autres) moteur(s) soit (soient) lui-même (eux-mêmes) dans l'un desdits second état intermédiaire ou activé, cette donnée ayant donc été relevée et échangée. Dans le cas où le pilote appuie à nouveau sur le bouton pour annuler son ordre, la logique d'activation repasse à l'état désactivé. La logique d'activation passe à l'état désactivé dans le cas également où au moins une partie des conditions de sécurité ne sont pas remplies. Dans ce dernier cas, la logique d'activation est à l'état désactivé alors que le bouton de la cabine de pilotage peut être toujours enfoncé et allumé. Le pilote doit alors appuyer à deux reprises sur le bouton, de façon à le mettre en position sortie puis à nouveau en position enfoncée, pour passer la logique d'activation à l'état armé. L'ordre du pilote est dans ce cas nécessaire pour le réarmement de la synchronisation.

Les moyens d'exécution du procédé selon l'invention peuvent par exemple comprendre une puce électronique, dans laquelle est codée au moins une logique d'activation, des portes logiques (ET, OU, NON, etc.), et des moyens de sommation, de comparaison, de détection de front, de condition, etc.

Les conditions d'application et de maintien de la synchronisation peuvent être vérifiées à intervalles réguliers, par exemple toutes les 30ms.

On aura compris que lorsque la logique d'activation est dans le premier ou second état intermédiaire, elle est désactivée.

Lorsque les moteurs sont à double corps et comprennent un corps basse-pression (BP) et un corps haute-pression (HP), les conditions pour l'application de la synchronisation des corps BP et/ou HP peuvent comprendre par exemple une ou plusieurs des conditions suivantes :

- A1 : la différence des consignes de vitesses des rotors BP ou HP des moteurs est inférieure à 10% ;
- A2 : aucun défaut pouvant affecter la santé des moteurs ou engendrer des risques pour l'avion n'est détecté ;
- A3 : la différence des vitesses mesurées des rotors BP ou HP des moteurs est inférieure à 10% ;
- A' : la différence entre la consigne de vitesse et la vitesse mesurée BP ou HP de chaque rotor est inférieure à 10%;
- B : au moins l'un des moteurs est au ralenti ; et
- C : l'avion est en vol et n'est ni en phase de décollage, ni en phase de montée.

La logique d'activation peut passer de l'état activé à l'état désactivé lorsque les conditions A1, A2, et éventuellement A3 (pour la synchronisation HP), ne sont pas remplies. La logique d'activation peut être passée de l'état activé à l'état armé lorsque les conditions C ne sont pas remplies.

On préférera une logique du front montant sur l'ordre pilote qui permet de ne pas armer la logique d'activation si elle a été désactivée et que le bouton précité de la cabine de pilotage est resté enfoncé.

L'invention sera mieux comprise et d'autres caractéristiques, détails et avantages de celle-ci apparaîtront plus clairement à la lecture de la description qui suit, faite à titre d'exemple non limitatif et en référence aux dessins annexés, dans lesquels :

- la figure 1 est un schéma illustrant une logique d'activation selon l'art antérieur pour la synchronisation des rotors des corps basse-pression des moteurs d'un avion ;
- la figure 2 est un graphe très schématique représentant l'évolution des consignes de synchronisation des rotors BP des moteurs d'un avion, en fonction du régime de ces moteurs, selon l'art antérieur ;
- la figure 3 est un schéma illustrant une logique d'activation aussi selon l'art antérieur pour la synchronisation des rotors des corps haute-pression des moteurs d'un avion ;
- la figure 4 est encore un graphe très schématique, selon l'art antérieur, représentant l'évolution des consignes de synchronisation des rotors HP des moteurs d'un avion, en fonction du régime de ces moteurs, et
- la figure 5 est un schéma illustrant une logique d'activation selon l'invention pour la synchronisation des rotors des moteurs d'un avion permettant notamment de prendre en compte l'état de la synchronisation des moteurs les uns vis-à-vis des autres. Cette logique est entrée en mémoire de chaque calculateur associé à chacun des moteurs à synchroniser.

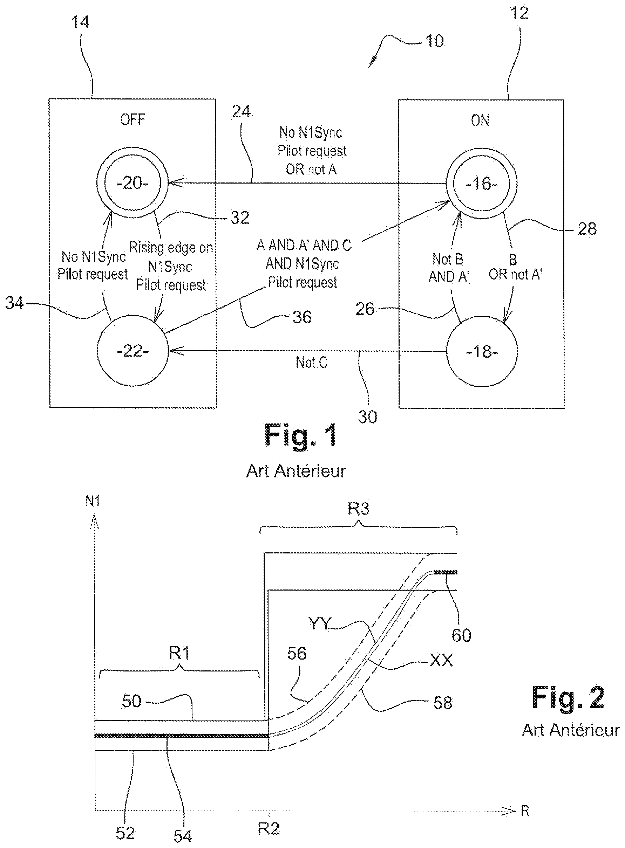

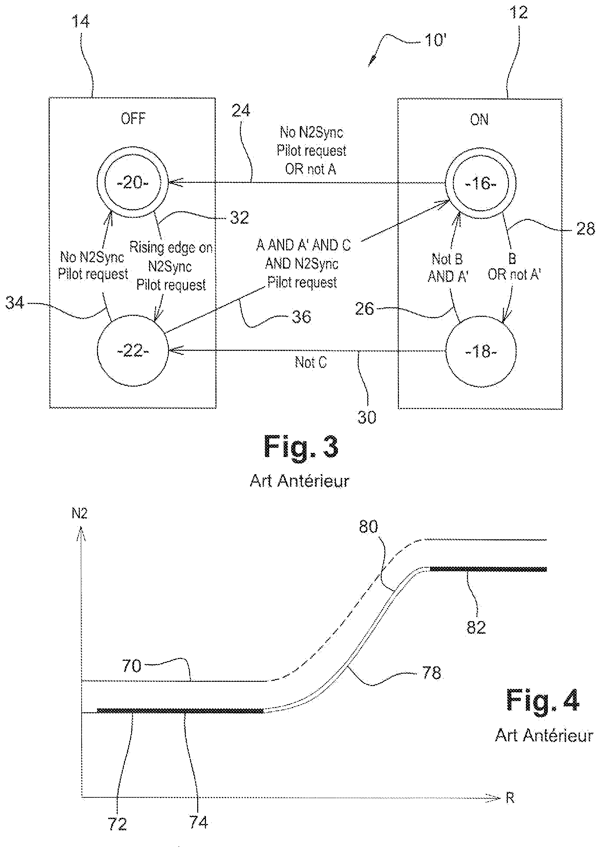

Les schémas des figures 1 et 3 représentent des logiques 10, 10' d'activation de la synchronisation des moteurs d'un avion selon l'art antérieur de WO2013/034839, et en particulier de moteurs à double corps, tels que des turboréacteurs ou des turbopropulseurs. Le schéma de la figure 1 représente la logique 10 d'activation de la synchronisation des rotors des corps basse-pression (BP) des moteurs et le schéma de la figure 3 représente la logique 10' d'activation de la synchronisation des rotors des corps haute-pression (HP) de ces moteurs.

Dans chaque logique d'activation 10, 10', la synchronisation peut être en mode ON ou marche (représenté par le rectangle 12) ou en mode OFF ou arrêt (représenté par le rectangle 14). Dans l'exemple représenté, la logique d'activation 10, 10' définit quatre états d'activation de la synchronisation : deux états en mode ON (état activé garanti 16 et état activé non garanti 18) et deux états en mode OFF (état désactivé 20 et état armé 22).

Les flèches 24 à 36 représentent les passages possibles d'un état de synchronisation à un autre état de synchronisation, certains de ces passages étant automatiques dès que des conditions d'application de la synchronisation changent, et d'autres passages nécessitant l'émission d'un ordre d'activation ou de désactivation par le pilote de l'avion.

Les conditions d'application de la synchronisation sont de deux types : des conditions de sécurité destinées à protéger les moteurs et l'avion et des conditions d'activation destinées à optimiser le fonctionnement des moteurs.

Dans l'exemple de réalisation représenté dans les dessins, la logique d'activation 10, 10' comprend quatre conditions, appelées respectivement A, A', B et C. Les conditions A, A', B et C de la logique d'activation 10 de la synchronisation des corps BP ne sont pas toutes identiques à celles de la logique d'activation 10' de la synchronisation des corps HP.

En ce qui concerne la synchronisation des corps BP (figure 1), les conditions A comprennent une condition d'activation A1 et une condition de sécurité A2. La condition d'activation A1 est :

$$\left| \Delta N1dmd\_PWM \right| < 5\%,$$

selon laquelle la différence des consignes de vitesses N1 des rotors BP des moteurs (en valeur absolue) doit être inférieure à 5%. $\Delta N1$ représente la différence entre les vitesses des rotors BP, « dmd » signifie que c'est la valeur de consigne de chaque moteur qui est prise en compte, et « PWM » signifie que cette valeur de consigne est propre à chaque moteur et est calculée par une fonction Power Management dans un calculateur de chaque moteur (cette fonction calcule les consignes N1 en fonction de la position de la manette des gaz et d'autres paramètres). Si les moteurs ont des régimes BP trop différents (A1 > 5% par exemple parce que les manettes de commande des moteurs dans la cabine de pilotage sont dans des positions différentes, ou parce que les consignes sont trop différentes du fait que l'écart entre les vitesses N1 des moteurs est trop différent pour que ces moteurs produisent une même poussée), la condition A1 n'est pas remplie. C'est donc l'écart entre les deux consignes d'origine qui est surveillé. La synchronisation peut donc être désactivée si les manettes de commande des moteurs sont dans des positions différentes (c'est-à-dire sont écartées l'une de l'autre).

La condition d'activation A2 est l'absence de détection d'un défaut pouvant endommager les moteurs ou engendrer des risques pour les moteurs ou l'avion et les passagers. En effet, la synchronisation étant une fonction de confort, aucun risque n'est pris et elle est désactivée en cas d'événement moteur intempestif (pompage, survitesse, sous ou sur-poussée, etc.) ou de panne, pour éviter que le moteur sain se mette à suivre le comportement du moteur défaillant notamment.

Les conditions A1 et A2 sont cumulatives et doivent être toutes les deux remplies pour que les conditions A soient considérées comme remplies.

Comme indiqué par la flèche 24, ces conditions A doivent nécessairement être remplies pour l'activation de la synchronisation, c'est-à-dire pour que la synchronisation soit en mode ON. Dans le cas où ces conditions A ne sont pas remplies (ou lorsque les conditions « not A » sont remplies), la synchronisation est automatiquement désactivée et passe du mode ON (de l'état activé garanti 16 ou de l'état activé non garanti 18) au mode OFF (état désactivé 20). Ces conditions A, qui comprennent à la fois une condition d'activation A1 et une condition de sécurité A2, sont donc nécessaires pour l'activation de la synchronisation, et ce quels que soient les ordres transmis par le pilote. La sécurité est donc prépondérante par rapport au confort procuré par la synchronisation des moteurs de l'avion.

Comme indiqué dans ce qui précède, les conditions A comprennent deux conditions A1 et A2 cumulatives. Dans le cas où l'une d'entre elles ne serait plus remplie, la synchronisation se désactiverait, qu'elle soit à l'état activé garanti ou non garanti. En effet, sur un événement moteur ou une panne, le pilote doit réagir et décider s'il souhaite réactiver la synchronisation une fois la panne corrigée. Sur un écart des consignes, c'est a priori le pilote qui en est à l'origine et c'est donc à lui que revient la décision de réactiver la synchronisation.

Comme indiqué sur la flèche 24, le passage de l'état activé (non garanti 18 ou garanti 16) à l'état désactivé 20 peut également résulter d'un ordre transmis par le pilote de l'avion qui souhaite désactiver la synchronisation (« No N1Sync Pilot request »). Les conditions « not A » et « No N1Sync Pilot request » ne sont pas cumulatives du fait du terme OR (ou). Il suffit donc que l'une ou l'autre de ces conditions soient remplies pour que la synchronisation soit désactivée.

Les conditions d'activation A' comprennent deux conditions d'activation A'1 et A'2, qui sont respectivement :

$$\left| N1dmd\_ctrl1 - N1sel1 \right| < 5\%,$$

et

$$\left| N1dmd\_ctrl2 - N1sel2 \right| < 5\%,$$

selon lesquelles la différence entre la consigne (« dmd », "demand" en anglais) et la valeur mesurée (« sel », "selected" en anglais) de la vitesse N1 de chaque rotor BP (en valeur absolue) doit être inférieure à 5%. « ctrl » signifie que c'est la consigne de régulation ("control" en anglais) courante qui est prise en compte, c'est-à-dire la consigne moyennée commune si on est en synchronisation. Ces conditions sont remplies lorsque les deux moteurs sont en régime stabilisé et ne sont donc pas en régime transitoire. A contrario, les conditions « not A' » sont remplies lorsqu'au moins l'un des moteurs est en régime transitoire.

Ces conditions A' doivent être nécessairement remplies pour activer la synchronisation. Toutefois, lorsqu'elles ne sont plus remplies, la synchronisation n'est pas nécessairement désactivée, comme cela sera expliqué dans ce qui suit.

Les conditions d'activation B sont remplies si au moins l'un des moteurs est au ralenti. Ces conditions sont utiles pour le passage entre l'état activé garanti et l'état activé non garanti, et inversement, lorsque l'avion est contrôlé par une boucle ralentie et que la manette de commande est en position ralenti.

Comme indiqué par la flèche 26, la logique d'activation passe de l'état activé non garanti 18 à l'état activé garanti 16 si les conditions A' précitées sont remplies et que les conditions B ne sont pas remplies (ou que les conditions « not B' » sont remplies). La logique d'activation passe de l'état activé garanti 16 à l'état activé non garanti 18 si l'une ou l'autre des conditions B sont remplies ou que les conditions A' ne sont pas remplies (ou inversement, que les conditions « not A' » sont remplies - flèche 28).

Autrement dit, la logique d'activation passe de l'état activé non garanti 18 à l'état activé garanti 16 si les moteurs ne sont pas au régime de ralenti et si l'écart entre les valeurs de consigne et de mesure de la vitesse N1 de chaque moteur est inférieur à 5%.

A titre d'exemple, lorsque les moteurs sont en régime transitoire, les conditions A' ne sont pas remplies. La logique d'activation passe à l'état activé non garanti car il serait inutile de désactiver la synchronisation puisque la régulation ne se fait plus par les vitesses N1. Le fait que la consigne de vitesse N1 soit la consigne propre du moteur ou la consigne commune de synchronisation importe peu. Lorsque les conditions A' seront à nouveau remplies, à la fin du transitoire, la logique d'activation repassera automatiquement à l'état activé garanti.

On a représenté en figure 2 l'évolution de la vitesse N1 des rotors BP des moteurs d'un avion, lorsqu'un changement des régimes de ces moteurs intervient.

Dans l'exemple considéré, l'avion est équipé de deux moteurs seulement et le graphe de la figure 2 comprend deux courbes 50, 52 représentant les consignes des vitesses N1 propres aux moteurs, c'est-à-dire les consignes résultant des positions des manettes des gaz imposées par le pilote de l'avion. Ces courbes 50, 52 sont en forme de marche d'escalier et comprennent chacune une première partie horizontale représentant une consigne N1 constante car le régime R1 du moteur est stabilisé, une partie verticale représentant une variation de la consigne N1 car le régime R2 est transitoire, et une nouvelle partie horizontale représentant une consigne N1 constante car le régime R3 est à nouveau stabilisé.

Le passage du régime R1 stabilisé au régime R2 transitoire est dû à un déplacement des manettes des gaz par le pilote de l'avion. Comme cela est visible en figure 2, les consignes N1 propres aux moteurs sont légèrement différentes pour obtenir une même poussée, même si les manettes des gaz des moteurs sont dans la même position. On peut en effet constater que deux moteurs d'un même avion peuvent tourner à des vitesses légèrement différentes pour produire une même poussée.

La consigne N1 pour la synchronisation des rotors BP est égale à la moyenne des consignes N1 propres aux moteurs. Les vitesses N1 des moteurs adoptent donc cette consigne qui est schématiquement représentée par le trait continu épais 54 en figure 2, qui se situe entre les courbes 50 et 52 dans la première partie horizontale précitée de ces courbes.

Lorsque les conditions A' ne sont plus remplies, c'est-à-dire que les moteurs sont en régime transitoire, la synchronisation des rotors BP est passée à l'état activé non garanti. En transitoire, chaque moteur est régulé par une consigne en dN/dt, intégrée à partir de la vitesse du rotor courante. Ainsi, les portions de courbe 56 et 58 représentent l'évolution de la vitesse N1 du rotor BP que chaque moteur aurait eu sans la synchronisation: ils partent de leur vitesse courante, et suivent deux courbes obtenues grâce à l'intégration de leurs consignes de transitoire en dN/dt, qui sont proches. Or, les deux moteurs étaient synchronisés juste avant leur passage en transitoire. Lorsqu'ils passent en transitoire, ils ont donc pratiquement la même vitesse N1 du rotor BP courante. Leurs vitesses suivent donc deux courbes 62 et 64 sensiblement identiques, issues de deux consignes en dN/dt elles aussi proches, bien que techniquement ils ne soient pas sur la même consigne de synchronisation. Lorsque les conditions A' sont à nouveau remplies, la logique d'activation est passée à l'état activé garanti et les vitesses N1 peuvent adopter la consigne commune pour la synchronisation des rotors BP, qui est égale à la moyenne des consignes propres aux moteurs (trait continu épais 60 en figure 2).

Les conditions d'activation C sont remplies lorsque l'avion est en vol et qu'il n'est ni en phase de décollage ni en phase de montée. Les manettes de commande des moteurs ne sont alors pas au-delà de la position « Max Climb ».

Comme indiqué par la flèche 30, ces conditions C doivent nécessairement être remplies pour l'activation de la synchronisation, c'est-à-dire pour que la synchronisation soit en mode ON. Dans le cas où ces conditions C ne sont pas remplies (ou lorsque les conditions « not C » sont remplies), la synchronisation passe automatiquement du mode ON (de l'état activé garanti 16 ou de l'état activé non garanti 18) au mode OFF (état armé 22). La logique d'activation ne passe donc pas à l'état désactivé pour qu'elle puisse se réactiver automatiquement sans que le pilote réitère son ordre.

Un ordre pilote (N1Sync Pilot Request) est nécessaire pour passer la logique d'activation de l'état désactivé 20 à l'état armé 22 (flèche 32), par appui sur un bouton (N1Sync) correspondant, dans la cabine de pilotage.

La cabine de pilotage de l'avion comprend deux boutons d'activation de la synchronisation, un premier bouton (N1Sync) pour activer la synchronisation des corps BP des moteurs et un second bouton (N2Sync) pour activer la synchronisation des corps HP des moteurs. Chacun de ces boutons peut adopter deux positions, respectivement ON et OFF. En position ON, le bouton est enfoncé et allumé et, en positon OFF, il est sorti et est éteint. Le pilote ne peut pas demander simultanément la synchronisation des deux corps des moteurs. Dans le cas où il appuie sur le premier bouton pour l'enfoncer, alors que le second bouton est déjà en position enfoncée, ce second bouton se désenclenche automatiquement pour revenir en positon sortie.

L'ordre du pilote (N1Sync Pilot Request) nécessite donc un appui sur le bouton N1Sync pour l'enfoncer et le mettre en position ON.

Un autre ordre du pilote (No N1Sync Pilot Request) est nécessaire pour passer la logique d'activation de l'état armé 22 à l'état désactivé 20 (flèche 34), par appui à nouveau sur le bouton N1Sync, de façon à ce qu'il soit en position sortie ou OFF.

Comme on l'a vu dans ce qui précède, un ordre du pilote (No N1Sync Pilot Request) peut être nécessaire pour passer la logique d'activation de l'état activé à l'état désactivé (flèche 24). Cet ordre du pilote nécessite également un appui sur le bouton N1Sync de façon à le mettre en positon sortie ou OFF.

Dans le cas où le passage de la logique d'activation de l'état activé (16 ou 18) à l'état désactivé 20 résulte du fait que les conditions A ne sont pas remplies (flèche 24), la logique d'activation est à l'état désactivé alors que le bouton N1Sync est toujours en position enfoncée ou ON. Pour armer la synchronisation (flèche 32), le pilote devra appuyer deux fois sur le bouton pour d'abord le désenclencher, puis pour le réenclencher. En effet, la logique de l'invention doit détecter un front montant sur l'ordre pilote pour que la logique d'activation soit passée à l'état activé.

La flèche 36 représente le passage de la logique d'activation de l'état armé 22 à l'état activé 16. Les conditions A, A', et C doivent être remplies pour activer la synchronisation. Il est de plus nécessaire que le bouton N1Sync soit en position ON ou enfoncée, ce qui signifie que le pilote a déjà donné l'ordre d'activer la synchronisation (N1Sync Pilot Request). Ces conditions sont cumulatives et doivent donc toutes être remplies pour activer la synchronisation.

Aucun ordre du pilote n'est donc nécessaire pour confirmer et activer la synchronisation lorsque le bouton N1Sync est en position ON ou enfoncée et que la logique d'activation est passée à l'état armé 22 du fait que les conditions C n'ont plus été remplies (flèche 30). Toutefois, comme cela est indiqué sur la flèche 32, un ordre du pilote est nécessaire pour réarmer la synchronisation qui est passée à l'état désactivé du fait que les conditions A n'ont plus été remplies (flèche 24). La réactivation de la synchronisation n'est donc automatique que dans certains cas, ce qui permet d'améliorer les performances des moteurs et d'assurer une protection des moteurs et de l'avion.

En ce qui concerne la synchronisation des corps HP (logique d'activation 10' en figure 3), les conditions A comprennent deux conditions d'activation A1 et A3 et une condition de sécurité A2. Les conditions d'activation A1 et A3 sont :

$$\left| \Delta N1dmd \right| < 5\%,$$

et

$$\left| \Delta N2sel \right| < 5\%,$$

selon lesquelles la différence des valeurs de consigne (« dmd ») des vitesses des rotors BP des moteurs (en valeur absolue) doit être inférieure à 5%, et la différence des valeurs mesurées (« sel ») des vitesses des rotors HP des moteurs (en valeur absolue) doit être inférieure à 5%. $\Delta N1$ représente la différence entre les vitesses des rotors BP et $\Delta N2$ représente la différence entre les vitesses des rotors HP. Pour la synchronisation des corps HP, un moteur est désigné maître, l'autre est l'esclave. Le moteur esclave prend pour nouvelle consigne en vitesse HP la mesure de la vitesse HP de l'autre moteur. Il n'est donc pas nécessaire de différencier la consigne "N1dmd_PWM" de la consigne "N1dmd_ctrl", car la consigne de vitesse N1 n'est pas modifiée par la synchronisation.

La condition supplémentaire A3 permet de désactiver la synchronisation si l'écart entre les deux mesures de vitesses N2 est inférieur à 5%. Il est en effet nécessaire de vérifier cela à cause de la nature de ce type de synchronisation où la consigne du moteur esclave est la mesure de l'autre moteur. Cela évite d'une part les sauts de poussée trop importants à l'activation/désactivation de la synchronisation, et cela évite surtout le risque d'un moteur maître fou qui subirait une panne ou événement moteur non détecté et contaminerait le moteur esclave sain.

La condition d'activation A2 reste l'absence de détection d'un défaut pouvant endommager les moteurs ou engendrer des risques pour les moteurs ou l'avion et les passagers.

Les conditions A1, A2 et A3 sont cumulatives et doivent être toutes remplies pour que les conditions A soient considérées comme remplies.

Comme pour la synchronisation des corps BP des moteurs, la synchronisation des corps HP passe de l'état activé (garanti 16 ou non garanti 18) à l'état désactivé en fonction des résultats des vérifications des conditions A (flèche 24).

Comme indiqué sur cette flèche 24, le passage de l'état activé 16, 18 à l'état désactivé 20 peut résulter d'un ordre transmis par le pilote de l'avion qui souhaite désactiver la synchronisation (« No N2Sync Pilot request »), en appuyant sur le bouton N2Sync pour le mettre en position OFF ou sortie.

Les conditions d'activation A' comprennent deux conditions d'activation cumulatives A'1 et A'2, qui sont respectivement :

$$\left| N1dmd1 - N1sel1 \right| < 5\%,$$

et

$$\left| N1dmd2 - N1sel2 \right| < 5\%,$$

selon lesquelles la différence entre la valeur de consigne et la valeur mesurée de la vitesse N1 de chaque rotor BP (en valeur absolue) doit être inférieure à 5%.

La figure 4 représente l'évolution de la vitesse N2 des rotors HP des moteurs d'un avion, lorsqu'un changement des régimes de ces moteurs intervient.

Les courbes 70, 72 représentent les consignes des vitesses N2 propres aux moteurs, et comprennent chacune une première partie horizontale pour laquelle les consignes N2 sont constantes pendant un régime R1 stabilisé, une partie inclinée pour laquelle les consignes N2 augmentent pendant un régime R2 transitoire, et une nouvelle partie horizontale pour laquelle les consignes N2 sont constantes pendant un régime R3 stabilisé.

Les positions de ces courbes 70, 72, l'une par rapport à l'autre, permettent d'identifier le moteur maître pour la synchronisation des corps HP. Le moteur maître est celui dont le rotor HP tourne à la plus faible vitesse N2 pour fournir une poussée donnée, c'est-à-dire celui correspondant à la courbe 72 en figure 4.

La consigne N2 pour la synchronisation des rotors HP est égale à la consigne propre au moteur maître, c'est-à-dire à la consigne correspondant à la courbe 72. Cette consigne N2 est schématiquement représentée par le trait continu épais 74 en figure 4, qui se situe sur la courbe 72 dans la première partie horizontale précitée de cette courbe.

En régime transitoire, la synchronisation des rotors HP passe à l'état activé non garanti. Comme en synchronisation des vitesses N1, les vitesses N2 de chaque moteur suivent des trajectoires 78 et 80 sensiblement identiques, car issues de consignes en dN/dt proches, dont l'intégration se fait à partir de la même valeur initiale. Lorsque le régime est à nouveau stabilisé (R3), la logique d'activation est passée à l'état activé garanti et les vitesses N2 adoptent la consigne N2 pour la synchronisation des rotors HP, qui est égale à la consigne propre au moteur maître (trait continu épais 82 en figure 2).

Les conditions d'activation B et C de la logique d'activation 10' des corps HP des moteurs sont identiques à celles décrites ci-dessus, concernant la logique d'activation 10 des corps BP de ces moteurs.

L'invention est applicable à la synchronisation de deux, trois, quatre moteurs, voire plus, d'un même avion. Dans le cas de la synchronisation des corps BP de moteurs du type à double corps, les consignes N1 de synchronisation peuvent être égales à la moyenne des consignes N1 propres aux différents moteurs. Concernant la synchronisation des corps HP des moteurs, les consignes N2 pour la synchronisation sont de préférence les consignes propres à l'un des moteurs considéré comme le moteur maître, les autres moteurs étant considérés comme des moteurs esclaves destinés à suivre le comportement du moteur maître (étant précisé que, dans ce mode de réalisation, ce sont donc des paramètres de vitesse de rotation qui sont pris en compte ; mais ce pourrait être d'autres paramètres moteur, tels qu'un débit de carburant, des pressions dans la chambre de combustion et/ou des différences - ou un rapport - de pressions entre l'entrée et la sortie de l'étage des compresseurs.

Quoi qu'il en soit, quand au moins deux moteurs de l'avion sont concernés par une synchronisation, on a indiqué plus avant dans la description qu'on peut souhaiter éviter qu'un moteur se trouver activé seul, car ceci peut affecter la synchronisation, voire de bon fonctionnement des moteurs.

La figure 5 illustre une solution proposée par l'invention de logique 100 d'activation de la synchronisation des moteurs d'un avion, qui convient alors. Ce cas convient en particulier pour la synchronisation des rotors des corps tant haute-pression que basse-pression des moteurs de l'avion.

Figure 5, les repères utilisés sont les mêmes que ceux des figures 1 et/ou 3 lorsque les états ou les passages entre états correspondent, et sont différents sinon. Ci-après, ce sont très essentiellement les différences entre les solutions qui sont donc développées.

Sur cette figure 5, il n'y a donc plus d'état, autre de (pleinement) activé 16, dans lequel on active la synchronisation (voir état 18 figure 1 ou 3 qui avait donc pour objectif de rester activé lorsqu'on est en régime transitoire - lors d'une accélération ou décélération - ou lorsqu'on est au ralenti).

Cette évolution est en particulier due au fait qu'en régime transitoire la condition d'écart entre ici la consigne N1 et la mesure N1 en liaison avec la condition A' s'est avérée s'activer très vite, la logique ne restant de fait que très peu de temps dans cet état 18.

De plus, il a été décidé de prendre en compte l'état de la fonction synchronisation des différents moteurs de propulsion en vol de l'avion, afin de s'assurer qu'un moteur ne se déclare pas activé seul, et que si l'un désactive, l'autre aussi, étant précisé que, dans ce qui suit, lorsqu'on se réfère à un passage de « la » logique d'activation d'un état à un autre, cela vaut pour un moteur, chaque calculateur de moteur ayant en mémoire cette même logique d'activation et des données étant échangées entre les calculateurs.

Pour cela, sur chaque moteur, le passage de la logique d'activation de l'état armé 22 à l'état activé 16 va s'opérer automatiquement via successivement un premier (38) puis un deuxième (39) états intermédiaires de la logique d'activation, qu'il s'agisse d'une synchronisation des corps BP (N1Sync) ou HP (N2Sync) des moteurs.

Avant, ou pour, tout passage de la logique d'activation du second état intermédiaire 39 à l'état activé 16, vont être effectués :

- une prise en compte, sur chaque moteur, de l'état d'activation de la synchronisation,
- et un échange de cette donnée entre les moteurs,

On pourra utiliser la liaison numérique ARINC pour échanger entre les moteurs les données relatives à l'état de la logique de synchronisation les concernant. Des détails de ceci sont fournis ci-après.

Ainsi, tout passage (flèche 40) de la logique d'activation du deuxième état intermédiaire 39 à l'état activé 16, sera conditionné, sur chaque moteur, au fait qu'il se trouve dans l'état 16 ou 39, et cette donnée sera échangée entre les moteurs.

Sans la condition d'échange précitée (c'est-à-dire la prise en compte de la situation de l'ensemble des moteurs concernés), lorsque les moteurs sont synchronisés et qu'un moteur a un problème mais que, le concernant, la condition d'activation est perdue avant la détection de la panne lors d'un contrôle automatique périodique, la synchronisation ne sera désactivée que sur le moteur ayant la panne. Dans ce cas de figure, l'autre moteur sera en attente de synchronisation. Si cela ne pose a priori pas de problème du point de vue du fonctionnement, l'affichage auprès du pilote serait différent selon les moteurs, ce qui peut être déstabilisant.

A priori, le passage par ce deuxième état intermédiaire 39 sera transitoire pour le logiciel ; on n'y restera que très peu de temps, la synchronisation s'activant sur les deux moteurs simultanément (passage 40) si, comme mentionné figure 5, l'autre (les autres) est (sont) aussi:

- dans ledit deuxième état intermédiaire 39 (condition « ready to activate »),
- ou dans l'état 16 de synchronisation activée (condition « XSynchState activated »).

Si, la logique d'activation étant passée à l'état activé 16 pour tous les moteurs simultanément, les (de préférence seules) conditions d'activation (conditions B figure 5 ; de préférence à l'exclusion donc des conditions de sécurité) deviennent non remplies pour l'un (au moins) des moteurs ou les données relatives à l'état d'activation de la synchronisation de ce moteur envoyées vers l'(les) autre(s) moteur(s) par liaisons numériques indiquent que sa logique d'activation est dans le premier état intermédiaire (38), alors que la logique d'activation de l'(desdits) autre(s) moteur(s) est dans l'état activé (16), alors on conseille en outre que la logique d'activation de cet(ces) autre(s) moteur(s) repasse automatiquement de cet état activé 16 au premier état intermédiaire 38 ; voir ligne 54.

Ainsi, dans ce premier état intermédiaire 38, on n'activera plus la synchronisation, à la différence des situations des figures 1, 3 où l'état 18 avait pour objectif de laisser la synchronisation activée lorsque les moteurs fonctionnaient en régime transitoire (lors d'une accélération ou décélération) ou au ralenti.

Or, il s'est avéré qu'en régime transitoire, la condition d'écart entre la consigne N1 et la mesure N1 dans la condition A' pouvait s'activer très vite, de sorte que le processus d'activation ne restait que très peu de temps dans cet état.

En outre, au ralenti, en mode activé de la synchronisation des corps BP des moteurs (N1Sync), premier bouton précité engagé, quand deux moteurs sont concernés, l'un augmente son régime N1 et l'autre le diminue, car il est typiquement préféré prendre la moyenne des consignes comme consigne commune. Celui des moteurs qui doit baisser son régime ne pourra jamais passer sous son régime de ralenti, donc il est avantageux de retenir comme (l'une au moins des) condition(s) d'activation B (hors sécurité) celle où l'un des moteurs tourne à une vitesse supérieure au ralenti.

En mode N2Sync (second bouton précité engagé), le ralenti est possible uniquement si le moteur esclave est amené à augmenter son régime de rotation. En dessous du régime de ralenti, la synchronisation n'est là encore pas possible ; le moteur tournera en pratique sur une autre boucle de gestion de fonctionnement plus prioritaire.

Il est donc jugé nécessaire d'indiquer au pilote que la synchronisation n'est pas activable. L'état activé non garanti 18 a ainsi été supprimé par rapport aux solutions des figures 1, 3, au profit du deuxième état intermédiaire 39, qui est donc l'un des modes désactivé (OFF) 14.

Ceci réalisé, la logique arrêtée prévoit :

- que le passage de la logique d'activation à l'état activé 16 de l'un des moteurs (flèche 40) impose que les conditions de sécurité et d'activation de l'autre, ou des autres, soient toutes remplies,
- que si l'un des moteurs passe à l'état désactivé (flèche 24), l'autre, ou les autres, y passe(nt) aussi automatiquement, et
- que pour chaque moteur les passages (41 puis 42) de la logique d'activation de l'état armé au premier 38 puis au second 39 états intermédiaires s'opèrent automatiquement lorsque ladite première partie puis ladite seconde partie, différente de la première, des conditions de sécurité et/ou d'activation sont remplies.

Comme indiqué toujours figure 5, des conditions A puis B remplies, correspondant donc respectivement à ces première puis seconde parties de conditions, pourront entrainer l'autorisation des passages automatiques 41 puis 42.

A l'inverse, de telles conditions, ici donc B puis A, non remplies (respectivement « NOT B » et « NOT A ») entraineront les passages automatiques retour 46,44 du second 39 état intermédiaire à l'état armé 22.

Ainsi, si la vérification périodique des conditions de sécurité et d'activation établit:

- que ladite seconde partie des conditions nécessaire à l'atteinte de l'état 39 n'est plus remplie pour l'un au moins des moteurs, alors que la logique d'activation est dans le second état intermédiaire 39, la logique d'activation passe dans le premier état intermédiaire 38 (voir ligne 46),
- que ladite première partie des conditions n'est plus remplie pour l'un au moins des moteurs, alors que cette logique d'activation est dans le premier état intermédiaire 38, ladite logique d'activation passe dans l'état armé 22 (voir ligne 44).

Plutôt que celles précitées en liaison avec la figure 1 ou 3, il est ici confirmé être avantageux, pour la sécurité :

- que les conditions A soient uniquement des conditions de sécurité (pouvant notamment concerner des exigences sur les régimes N1 et N2 et la condition A2 précitée),
- et que les conditions B soient uniquement des conditions d'activation (pouvant notamment concerner à nouveau les régimes N1 et N2 et la condition C précitée : l'avion est en vol et n'est ni en phase de décollage, ni en phase de montée).

Concernant, les conditions de passages 24,32,34 de la solution de la figure 5, elles demeurent comme figure 1 ou 3, à ceci près que, pour le passage 24, on ajoute la condition de sécurité « Xsynch=deactivated » qui correspond à la donnée selon laquelle l'un au moins des moteurs a perdu l'une au moins de ses conditions générales d'activation et qu'en conséquence la donnée échangée entre les moteurs doit faire passer la logique d'activation (de tous les moteurs de vol) à l'état désactivé 20.

Comme encore indiqué figure 5, cette condition est de préférence toujours alternative avec celles « NOT A » précitée et « No Pilot request » d'instruction de commande transmise sur les bus de pilotage par le pilote, pour désactiver la synchronisation.

Pour fiabiliser et sécuriser le fonctionnement, on préférera en outre, toujours comme indiqué figure 5 que, si la vérification périodique des conditions de sécurité et d'activation établit que ladite première partie des conditions (partie sécurité de préférence) n'est plus remplie pour l'un au moins des moteurs, alors que cette logique d'activation est dans le second état intermédiaire 39, ladite logique d'activation passe dans l'état armé 22 (voir ligne 48).

Dans la même approche sécuritaire, en particulier si l'étape de premier état intermédiaire 38 n'est donc accessible, depuis l'état armé 22, qu'une fois satisfaites toutes les conditions de sécurité, alors on préférera par ailleurs que le pilote puisse :

- en donnant un premier ordre de désactivation, faire passer la logique d'activation directement du second état intermédiaire 39 à l'état désactivé 20 (voir ligne 50), et/ou,
- en donnant un second ordre de désactivation, faire passer la logique d'activation directement du premier état intermédiaire 38 à ce même état désactivé 20 (voir ligne 52).

Plus généralement, il est considéré comme souhaitable que le pilote puisse intervenir à chaque étape de la synchronisation, de telle sorte qu'outre l'action précitée possible sur la ligne 24, des passages (respectivement 52,50,34) de la logique d'activation de l'un quelconque des premier état intermédiaire 38, second état intermédiaire 39 et état armé 22, vers l'état désactivé 20, soient effectués lorsqu'un ordre de désactivation est donné par le pilote, par exemple en enfonçant un bouton.

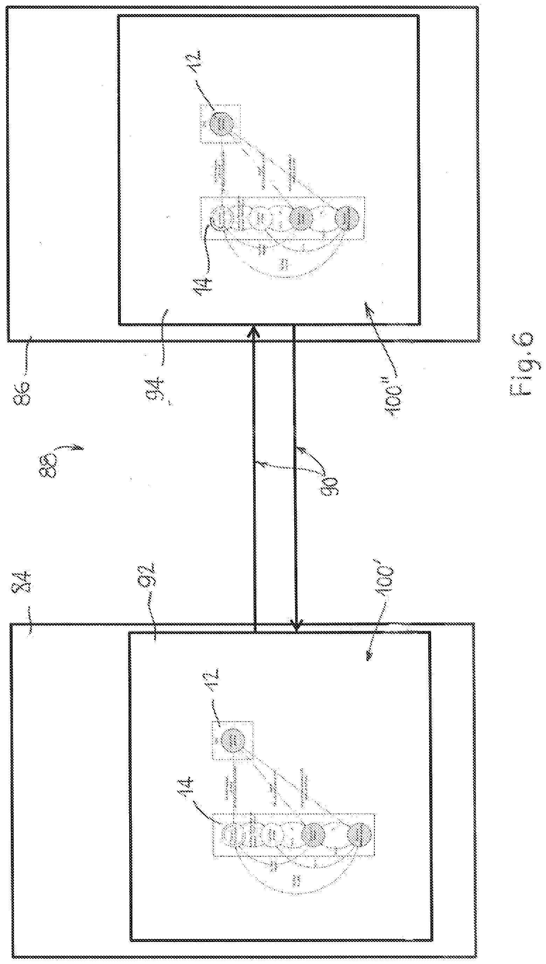

La figure 6 schématise une architecture permettant la mise en oeuvre du procédé de synchronisation ci-avant présenté.

Il est ici supposé que deux moteurs 84,86 d'un avion 88 sont à synchroniser entre eux au moyen de la même logique d'activation, dupliquée.

Typiquement, les deux moteurs 84,86 seront les moteurs disposés respectivement à gauche et à droite du fuselage, le plus souvent sous les ailes de l'avion, même si l'on en trouve disposés le long du fuselage, fixés à lui, latéralement de part et d'autre. Une solution à plus de deux moteurs, notamment deux par aile, ou un par aile et un troisième, central, en arrière au-dessus du fuselage (cas par exemple du DC10) est possible.

Comme déjà indiqué, un bus numérique, ici repéré 90, tel une liaison numérique ARINC, va permettre d'échanger entre les (calculateurs des) moteurs les données relatives à l'état de la logique de synchronisation les concernant.

Chaque moteur, ici donc le premier moteur 84 et le second moteur 86, va par conséquent contenir dans son calculateur, respectivement 92,94, une logique, respectivement 100', 100" d'activation de la synchronisation des moteurs. Chaque logique 100', 100" est bien sûr la réplique de la logique générale 100 détaillée avant. L'illustration de la figure 6 le confirme ; on retrouve d'ailleurs dans chaque contenu logique, les éléments 12 et 14 ci-avant présentés.

Chaque logique 100', 100", et sa fonction de synchronisation associée (c'est-à-dire pour mémoire la fonction synchroniser les corps basse-pression (BP) ou haute-pression (HP) des moteurs à double corps d'un avion pour diminuer les vibrations ressenties dans la cabine et le bruit, sera contenu dans le calculateur embarqué du moteur concerné. Ici, les logiques 100', 100" ont été chargées (codées) dans les calculateurs EEC associés respectivement aux moteurs 84,86. Et le bus numérique 90 assure l'échange des données entre les calculateurs 92,94, notamment celles relatives à l'état d'activation de chaque moteur.

Si les logiques 100', 100" sont donc de structures (codages) identiques, les données qui y sont contenues peuvent bien sûr être différentes, puisque l'état d'activation peut être a priori différent, à un moment donné, dans chaque moteur, et que c'est grâce à la prise en compte de l'état d'activation de l'autre moteur échangé, ou transmis, par la liaison numérique 90, que l'on va s'assurer que l'état d'activation de chaque moteur sera identique à tout instant, à savoir comme déjà indiqué (sur chaque moteur) :

- le passage (40) de la logique d'activation à l'état activé de l'un des moteurs impose que les conditions de sécurité et d'activation appliquée à l'autre, ou aux autres, moteur(s) soient toutes remplies,
- si la logique d'activation de l'un des moteurs passe à l'état désactivé (20), la logique d'activation de l'autre, ou des autres, moteur(s) y passe(nt) aussi automatiquement, et
- le passage (41, 42) de la logique d'activation de l'état armé au premier puis au second état intermédiaire s'opère automatiquement lorsqu'une première partie puis une seconde partie, différente de la première, des conditions de sécurité et/ou d'activation sont remplies.

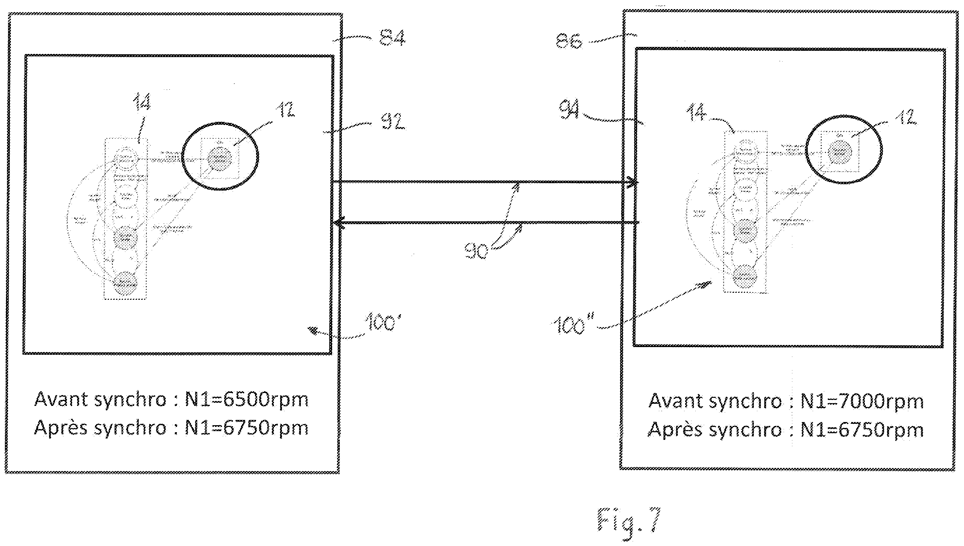

La figure 7 fournir un exemple de ce qui se passe dans ce cas, avec donc la logique commune de la figure 5, si le pilote (via un bouton pressé, par exemple) donne un ordre de synchronisation des régimes N1 des moteurs, tels ceux 84 et 86.

Par une liaison électrique adaptée, l'ordre est transmis (du bouton pressé) vers les calculateurs 92,94 qui analysent la situation des logiques 100',100" respectives et échangent entre eux, via le bus numérique 90.

Supposons qu'avant la demande du pilote, donc avant synchronisation, les régimes N1 des moteurs 84 et 86 soient respectivement N14= 6500 rpm et N16= 7000 rpm (radians par mn).

Comme mentionné ci-avant, la consigne de vitesse N1 pour la synchronisation des rotors BP pourra alors être égale à la moyenne des consignes N1 propres aux moteurs (voir la figure 2 dont les informations s'appliquent alors ; trait schématique continu épais 54-60 qui se situe entre les courbes 50 et 52 et leurs prolongements).

Si toutes les conditions sont réunies (voir conditions ci-avant), chaque moteur passe à l'état activé et prend pour nouvelle consigne la moyenne arithmétique des deux consignes : après synchronisation si confirmé par la logique 100,100',100" : N1commun= 6750rpm

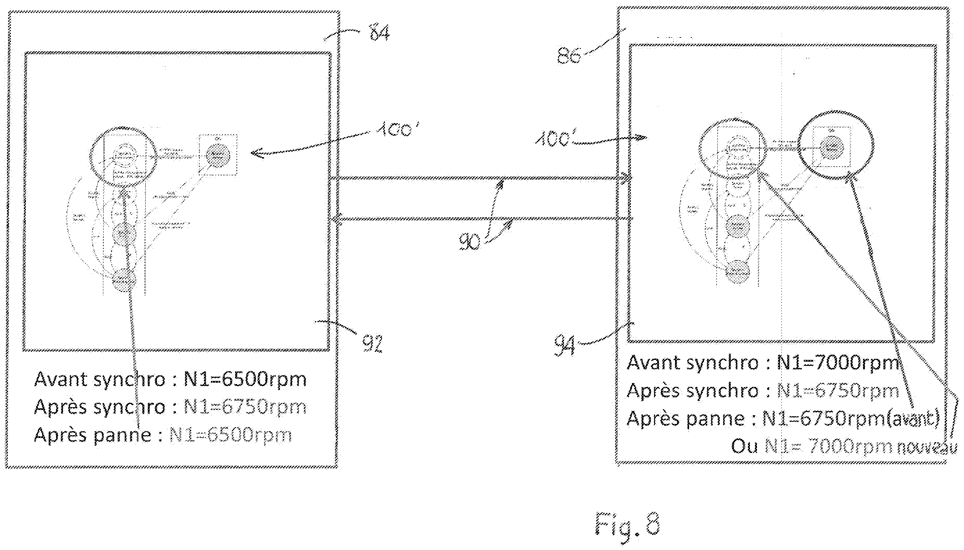

Supposons maintenant qu'une panne se produise sur le moteur 84, alors que les moteurs 84,86 sont synchronisés comme dans l'exemple ci-dessus. C'est le cas illustré figure 8 qui schématise le comportement de ces moteurs compte tenu de celui de leurs logiques d'activation 100',100".

Si cette panne se produit sur le moteur 84, la logique 100' d'activation de la synchronisation va désactiver cette fonction sur le moteur. Le moteur 84 revient alors à son régime de rotation avant synchronisation (ici N14= 6500 rpm).

Antérieurement, sans la prise en compte précitée de l'état d'activation de la synchronisation sur le moteur 84 (donc comme dans la solution de WO2013/034839), le moteur 86 serait resté activé et aurait continué de tourner à la vitesse moyenne précitée (ici N1commun= 6750rpm).

Avec l'évolution de l'invention, suite aux échanges ou transfert d'informations d'un moteur vers l'autre, le moteur 86 « se désactive » aussi, dès lors que sa logique 100" reçoit des données relative au fait que la logique 100' est passé à un état autre qu'activé (16). Le moteur 86 revient dont à son régime d'avant synchronisation (ici N16=7000 rpm).

Ainsi, la situation devient : N14= 6500 rpm et N16=7000 rpm. Les régimes de rotation N1 des moteurs ne sont donc plus synchronisés.

**Revendications**

**1.** Procédé de synchronisation entre eux des moteurs d'un avion au moyen d'au moins une logique d'activation par moteur, destinée à vérifier des conditions de sécurité et/ou des conditions d'activation pour l'application de la synchronisation, chaque logique d'activation (10, 10') définissant et évoluant entre au moins un état désactivé (20), un état armé (22) et un état activé (16), le procédé comprenant, par moteur:

- un passage (32) de la logique d'activation de l'état désactivé à l'état armé lorsqu'un ordre d'activation est donné par un pilote de l'avion ;
- une vérification périodique des conditions de sécurité et/ou des conditions d'activation en relation avec lesdits états, pour définir si lesdites conditions sont remplies ou non remplies,
- un passage (40, 41, 42) de la logique d'activation de l'état armé à l'état activé lorsque certaines des conditions de sécurité et/ou d'activation sont remplies ; et
- un passage (24, 34) de la logique d'activation de l'état activé ou armé à l'état désactivé lorsqu'un ordre de désactivation est donné par le pilote ou lorsque certaines des conditions de sécurité ne sont pas remplies,

**caractérisé en ce que** :

- le passage (40, 41, 42) de logique d'activation de l'état armé à l'état activé s'opère via successivement un premier puis un deuxième états intermédiaires (38, 39) de la logique d'activation,
- pour tout passage de logique d'activation du second état intermédiaire à l'état activé, un échange de cette donnée entre les moteurs est effectué par une liaison numérique d'échange, de telle sorte que :

-- le passage (40) de la logique d'activation à l'état activé de l'un des moteurs impose que les conditions de sécurité et d'activation appliquée à l'autre, ou aux autres, moteur(s) soient toutes remplies,
-- et, si la logique d'activation de l'un des moteurs passe à l'état désactivé (20), la logique d'activation de l'autre, ou des autres, moteur(s) y passe(nt) aussi, automatiquement, et

- pour chaque moteur, le passage (41, 42) de la logique d'activation de l'état armé au premier puis au second état intermédiaire s'opère automatiquement lorsqu'une première partie puis une seconde partie, différente de la première, des conditions de sécurité et/ou d'activation sont remplies.

**2.** Procédé selon la revendication 1, **caractérisé en ce que** le passage (40) de logique d'activation du second état intermédiaire (39) à l'état activé (16) est effectué sur l'un des moteurs si la(les) logique d'activation de l'autre (les autres) moteur(s) est (sont) dans ledit second état intermédiaire ou dans l'état activé.

**3.** Procédé selon l'une des revendications précédentes, **caractérisé en ce que**, sur ordre du pilote, la logique d'activation passe du second état intermédiaire (39) à l'état désactivé (20).

**4.** Procédé selon l'une des revendications précédentes, **caractérisé en ce que**, si la vérification périodique des conditions de sécurité et/ou d'activation établit que ladite seconde partie des conditions n'est plus remplie pour l'un au moins des moteurs ou que la donnée relative au passage à l'état activé de la logique d'activation de ce moteur envoyée vers l'(les) autre(s) moteur(s) par ladite liaison numérique indique que sa logique d'activation est dans le premier état intermédiaire (38), alors que la logique d'activation de l'(des) autre(s) moteur(s) est dans l'état activé (16), cette dernière passe dans le premier état intermédiaire (38).

5. Procédé selon l'une des revendications précédentes, **caractérisé en ce que** si la vérification périodique des conditions de sécurité et/ou d'activation établit que ladite première partie des conditions n'est plus remplie pour l'un au moins des moteurs, alors que la logique d'activation est dans le premier état intermédiaire (38), ladite logique d'activation passe dans l'état armé (22).

6. Procédé selon l'une des revendications précédentes, **caractérisé en ce qu'**un passage (52, 50, 34) de logique d'activation de l'un quelconque des premier état intermédiaire (38) et second état intermédiaire (39), vers l'état désactivé (20), est effectué lorsqu'un ordre de désactivation est donné par le pilote.

**Patentansprüche**

1. Verfahren zur Synchronisation der Motoren eines Flugzeugs zueinander mittels zumindest einer Aktivierungslogik pro Motor, die dazu bestimmt ist, die Sicherheitsbedingungen und/oder Aktivierungsbedingungen zum Durchführen der Synchronisation zu überprüfen, wobei jede Aktivierungslogik (10, 10') zumindest einen deaktivierten Zustand (20), einen vorgespannten Zustand (22) und einen aktivierten Zustand (16) definiert und zwischen diesen variiert, wobei das Verfahren pro Motor umfasst:

- einen Übergang (32) der Aktivierungslogik von dem deaktivierten Zustand in den vorgespannten Zustand, wenn von einem Piloten des Flugzeugs ein Aktivierungsbefehl erteilt wird;
- eine periodisch erfolgende Überprüfung der Sicherheitsbedingungen und/oder Aktivierungsbedingungen in Bezug auf die Zustände, um zu bestimmen, ob die Bedingungen erfüllt sind oder nicht erfüllt sind,
- einen Übergang (40, 41, 42) der Aktivierungslogik von dem vorgespannten Zustand in den aktivierten Zustand, wenn bestimmte der Sicherheits- und/oder Aktivierungsbedingungen erfüllt sind; und
- einen Übergang (24, 34) der Aktivierungslogik von dem aktivierten bzw. vorgespannten Zustand in den deaktivierten Zustand, wenn von dem Piloten ein Deaktivierungsbefehl erteilt wird oder wenn bestimmte der Sicherheitsbedingungen nicht erfüllt sind,

**dadurch gekennzeichnet, dass**

- der Übergang (40, 41, 42) der Aktivierungslogik von dem vorgespannten Zustand in den aktivierten Zustand aufeinanderfolgend über einen ersten und dann über einen zweiten Zwischenzustand (38, 39) der Aktivierungslogik erfolgt,
- wobei bei jedem Übergang der Aktivierungslogik vom zweiten Zwischenzustand in den aktivierten Zustand ein Austausch dieser Angabe zwischen den Motoren über eine digitale Austauschverbindung erfolgt, so dass:

-- der Übergang (40) der Aktivierungslogik in den aktivierten Zustand eines der Motoren vorgibt, dass die für den bzw. die anderen Motor(en) geltenden Sicherheits- und Aktivierungsbedingungen alle erfüllt sind, -- und, wenn die Aktivierungslogik von einem der Motoren in den deaktivierten Zustand (20) übergeht, die Aktivierungslogik des bzw. der anderen Motor(en) auch automatisch dazu übergeht, und

- wobei bei jedem Motor der Übergang (41, 42) der Aktivierungslogik von dem vorgespannten Zustand in den ersten und dann in den zweiten Zwischenzustand automatisch erfolgt, wenn ein erster Teil, dann ein vom ersten Teil verschiedener zweiter Teil der Sicherheits- und/oder Aktivierungsbedingungen erfüllt sind.

2. Verfahren nach Anspruch 1, **dadurch gekennzeichnet, dass** der Übergang (40) der Aktivierungslogik vom zweiten Zwischenzustand (39) in den aktivierten Zustand (16) an einem der Motoren dann erfolgt, wenn die Aktivierungslogik(en) des bzw. der anderen Motor(en) in dem zweiten Zwischenzustand oder in dem aktivierten Zustand ist bzw. sind.

3. Verfahren nach einem der vorangehenden Ansprüche, **dadurch gekennzeichnet, dass** auf Befehl des Piloten die Aktivierungslogik vom zweiten Zwischenzustand (39) in den deaktivierten Zustand (20) übergeht.

4. Verfahren nach einem der vorangehengenden Ansprüche, **dadurch gekennzeichnet, dass** dann, wenn die periodisch erfolgende Überprüfung der Sicherheits- und/oder Aktivierungsbedingungen ergibt, dass der zweite Teil der Bedingungen bei zumindest einem der Motoren nicht mehr erfüllt ist oder dass die Angabe bezüglich des Übergangs vom aktivierten Zustand der Aktivierungslogik des Motors, die über die digitale Verbindung dem bzw. den anderen Motor(en) zugesandt wird, angibt, dass seine Aktivierungslogik in dem ersten Zwischenzustand (38) ist, während die Aktivierungslogik des bzw. der anderen Motor(en) in dem aktivierten Zustand (16) ist, so geht letztere in den ersten Zwischenzustand (38) über.

5. Verfahren nach einem der vorangehenden Ansprüche, **dadurch gekennzeichnet, dass** dann, wenn die periodisch erfolgende Überprüfung der Sicherheits- und/oder Aktivierungsbedingungen ergibt, dass der erste Teil der Bedingungen bei zumindest einem der Motoren nicht mehr erfüllt ist, während die Aktivierungslogik in dem ersten Zwischenzustand (38) ist, dann geht die Aktivierungslogik in den vorgespannten Zustand (22) über.

6. Verfahren nach einem der vorangehenden Ansprüche, **dadurch gekennzeichnet, dass** ein Übergang (52, 50, 34) der Aktivierungslogik von irgendeinem aus erstem Zwischenzustand (38) und zweiten Zwischenzustand (39) in den deaktivierten Zustand (20) dann erfolgt, wenn von dem Piloten ein Deaktivierungsbefehl erteilt wird.

## Claims

1. A method for synchronising there between engines of an airplane, using at least one activation logic per engine, the activation being intended to check the safety and/or activation conditions in order to apply the synchronisation, with each activation logic (10, 10') defining and switching between at least a deactivated state (20), an armed state (22), and an activated state (16), with the method comprising, per engine:

   - the switching (32) of the activation logic from the deactivated state to the armed state when an activation order is given by the pilot of the airplane;
   - the periodical checking of the safety and/or activation conditions relative to said states, in order to define whether said conditions are met or not met,
   - the switching (40, 41, 42) of the activation logic from the armed state to the activated state when some of the safety and/or activation conditions are met; and
   - the switching (24, 34) of the activation logic from the activated state or the armed state to the deactivated state when a deactivation order is given by the pilot or when some of said safety conditions are not met,

   **characterized in that**:

   - the switching (40, 41, 42) of the activation logic from the armed state to the activated state is carried out via a first and then a second successive intermediate state (38, 39) of the activation logic,
   - for every switching of the activation logic from the second intermediate state to the activated state, an exchange of said data between the engines is carried out by an exchange digital link, so that:

      -- the switching (40) of the activation logic of one of the engines to the activated state requires that the safety and activation conditions applied to the other engine(s) are all met,
      -- and, if the activation logic of one of the engines switches to the deactivated state (20), the activation logic of the other engine(s) does so as well, automatically, and

   - for each engine, the switching (41, 42) of the activation logic from the armed state to the first and then to the second intermediate state takes place automatically when a first part and then a second part, different from the first one, of the safety and/or activation conditions are met.

2. The method according to claim 1, **characterized in that** the switching (40) of the activation logic from the second intermediate state (39) to the activated state (16) is carried out on one of the engines if the activation logic of the other engine(s) is(are) in said second intermediate state or in the activated state.

3. The method according to one of the preceding claims, **characterized in that**, following an order from the pilot, the activation logic switches from the second intermediate state (39) to the deactivated state (20).

4. The method according to one of the preceding claims, **characterized in that**, if the periodical checking of the safety/activation conditions states that said second part of the conditions is no longer met for at least one of the engines, or if the data relative to the switching to the activated state of the activation logic of such engine sent to the other engine(s) through said exchange digital link states that the activation logic thereof is the first intermediate state (38), whereas the activation logic of the other engine(s) is the activated state (16), the latter switches to the first intermediate state (38).

5. The method according to one of the preceding claims, **characterized in that**, if the periodical checking of the safety/activation conditions establishes that said first part of the conditions is no longer met for at least one of the engines, when the activation logic is in the first intermediate state (38), said activation logic switches to the armed state (22).

6. The method according to one of the preceding claims, **characterized in that** the switching (52, 50, 34) of the activation logic of any one of the first intermediate state (38) and second intermediate state (39) to the deactivated state (20) is carried out when a deactivation order is given by the pilot.

14

12

10

24

OFF

ON

No N1Sync
Pilot request
OR not A

-20-

-16-

32

28

Rising edge on
N1Sync
Pilot request

A AND A' AND C
AND N1Sync
Pilot request

No N1Sync
Pilot request

Not B
AND A'

B
OR not A'

34

26

36

-22-

-18-

Not C

30

**Fig. 1**

Art Antérieur

N1

R3

R1

YY

56

60

50

XX

58

52

54

R2

**Fig. 2**

Art Antérieur

R

14

12

10'

OFF

ON

24

No N2Sync
Pilot request
OR not A

-20-

-16-

32

28

A AND A' AND C
AND N2Sync
Pilot request

No N2Sync
Pilot request

Rising edge on
N2Sync
Pilot request

Not B
AND A'

B
OR not A'

34

36

26

-22-

-18-

Not C

30

# Fig. 3

Art Antérieur

N2

80

82

70

78

**Fig. 4**

Art Antérieur

72

74

R

Fig. 5

Fig.6

Avant synchro : N1=7000rpm
Après synchro : N1=6750rpm

Avant synchro : N1=6500rpm
Après synchro : N1=6750rpm

Fig. 7

Avant synchro : N1=6500rpm
Après synchro : N1=6750rpm
Après panne : N1=6500rpm

Avant synchro : N1=7000rpm
Après synchro : N1=6750rpm
Après panne : N1=6750rpm(avant)
Ou N1= 7000rpm nouveau

Fig.8

**RÉFÉRENCES CITÉES DANS LA DESCRIPTION**

**Documents brevets cités dans la description**

- FR 2639444 A1

- WO 2013034839 A